# EUROPÄISCHE PATENTSCHRIFT

(11) **EP 0 696 528 B1**
(45) Veröffentlichungstag und Bekanntmachung des Hinweises auf die Patenterteilung: **22.04.1998**
(21) Anmeldenummer: 95110859.6
(22) Anmeldetag: 12.07.1995
(51) Int. Cl.: B60R 11/06

(54) **Nothammer zum Einschlagen von Glasscheiben**
Emergency hammer for breaking glass panes
Marteau brise-vitre

(30) Priorität: 09.08.1994 DE 4428087
(43) Veröffentlichungstag der Anmeldung: 14.02.1996
(73) Patentinhaber: HAPPICH Fahrzeug- und Industrieteile GmbH, 42285 Wuppertal (DE)
(72) Erfinder: Poffo, Hans-Joachim, D-42285 Wuppertal (DE)

(56) Entgegenhaltungen:
- DE-A- 4 208 334
- US-A- 2 545 854

## Beschreibung

Die Erfindung bezieht sich auf einen Nothammer zum Einschlagen von Glasscheiben, welcher aus einem Stiel und einem daran angeordneten Hammerkopf besteht und von einer Haltevorrichtung getragen wird, die ihrerseits an einer Anschlußwand befestigbar ist, wobei eine den Nothammer mit der Haltevorrichtung verbindende Diebstahlsicherung in Form eines den bestimmungsgemäßen Gebrauch des Nothammers nicht behindernden Verbindungsglieds mit einem gegen Abreißen oder Durchtrennen geschützten Aufbau vorgesehen ist.

Eine aus einem Nothammer und einer Haltevorrichtung für diesen bestehende Baueinheit ist im Dokument DE-U-1 878 800 gezeigt. Der bekannte Nothammer ist an der Haltevorrichtung durch plombierte Drähte gegen unbefugte Benutzung, Mißbrauch und Diebstahl gesichert. Wie die Praxis gezeigt bat, ist eine solche Sicherung bei Nothämmern, die insbesondere in Omnibussen oder schienengebundenen Fahrzeugen in griffgünstiger Position jeweils mittels einer Haltevorrichtug angebracht sind, keineswegs ausreichend.

Bei einem durch die US-A-2 545 854 bekanntgewordene gattungsgemäßen Nothammer zum Einschlagen einer,einen Schalter einer Feueralarmeinrichtung gegen Mißbrauch schützenden Glasscheibe, ist für den Nothammer ebenfalls eine Diebstahlsicherung vorgesehen. Die Diebstahlsicherung verbindet den Nothammer mit der ihn tragenden Haltevorrichtung durch ein den bestimmungsgemäßen Gebrauch des Nothammers nicht behinderndes Verbindungsglied, welches als Gliederkette dargestellt und beschrieben ist. Die in der US-A-2 545 854 gezeigte Anordnung und Sicherung des Nothammers ist nicht für solche Nothämmer geeignet, die in Fahrzeugen installiert werden sollen, denn Fahrzeuge unterliegen häufigen Geschwindigkeits- und Richtungsänderungen die bei der bekannten Anordnung dazu führen würden, den Nothammer und das Verbindungsglied in Schwingungen zu versetzen. Dies kann zur Beschädigung des Fahrzeugs und zur Verletzung von Fahrzeuginsassen führen.

Aufgabe der vorliegenden Erfindung ist daher, den Abnehmern einen Nothammer nebst Haltevorrichtung zur Verfügung zu stellen, wobei für den Nothammer eine verbesserte Halterung und Sicherung gegen Diebstahl verwirklicht sein soll.

Zur Lösung dieser Aufgabe ist erfindungsgemäß vorgesehen, daß die Haltevorrichtung mit einem Gehäuseunterteil sowie mit einem Gehäuseoberteil ausgebildet ist, daß das Gehäuseoberteil Aushöhlungen und Klemmleisten zur Aufnahme und Halterung des Hammerkopfs und eines axialen Teilbereichs des Hammerstiels aufweist, daß das flexible Verbindungsglied aus einem Sicherungsseil besteht, und daß innerhalb des Gehäuses eine Seilaufwickeltrommel drehbeweglich angeordnet ist, die das darauf in Windungen gelegte Sicherungssseil trägt.

Das für die Verwirklichung der Erfindung zur Anwendung kommende Sicherungsseil weist bevorzugterweise eine kunststoffummantelte Drahtseele auf. Ein solches Seil kann nicht zerrissen und ohne Anwenden eines Spezialwerkzeugs auch nicht durchtrennt werden.

Bei einem etwaigen Gebrauch des Nothammers kann das Sicherungsseil von der Seilaufwickeltrommel abgezogen und später wieder auf diese aufgewickelt werden.

Das Aufwickeln des Sicherungsseils kann in weiterer Ausgestaltung der Erfindung wesentlich dadurch erleichtert werden, daß für die Seilaufwickeltrommel ein Federzugwerk vorgesehen ist.

Eine besonders bevorzugte Ausgestaltung der Erfindung ist gekennzeichnet durch eine Rücklaufsperre für das Federzugwerk. Diese Maßnahme stellt sicher, daß das Sicherungsseil nach dem Abziehen von der Seilaufwickeltrommel nicht unter Federspannung steht, womit der Nothammer völlig behinderungsfrei in Benutzung genommen werden kann.

Eine zusätzliche Sicherung des Nothammers gegen Diebstahl kann verwirklicht werden durch einen akustischen Signalgeber, der mit der Seilaufwickeltrommel gekuppelt ist. In Frage kommen kann hierfür eine an der Haltevorrichtung installierte Signalglocke oder alternativ auch ein Piezo-Elektronik-Signalgeber.

Ausführungsbeispiele der Erfindung werden nachfolgend anhand der Zeichnungen näher erläutert, und es zeigen:
- Fig. 1: eine an einer Anschlußwand befestigte Haltevorrichtung mit einem von dieser getragenen Nothammer,
- Fig. 2: einen Schnitt durch die Haltevorrichtung nach Fig. 1 etwa folgend der Linie II-II und
- Fig. 3: die Seilverbindung des Nothammers mit der von diesem beabstandet und im Vertikalschnitt dargestellten Haltevorrichtung.

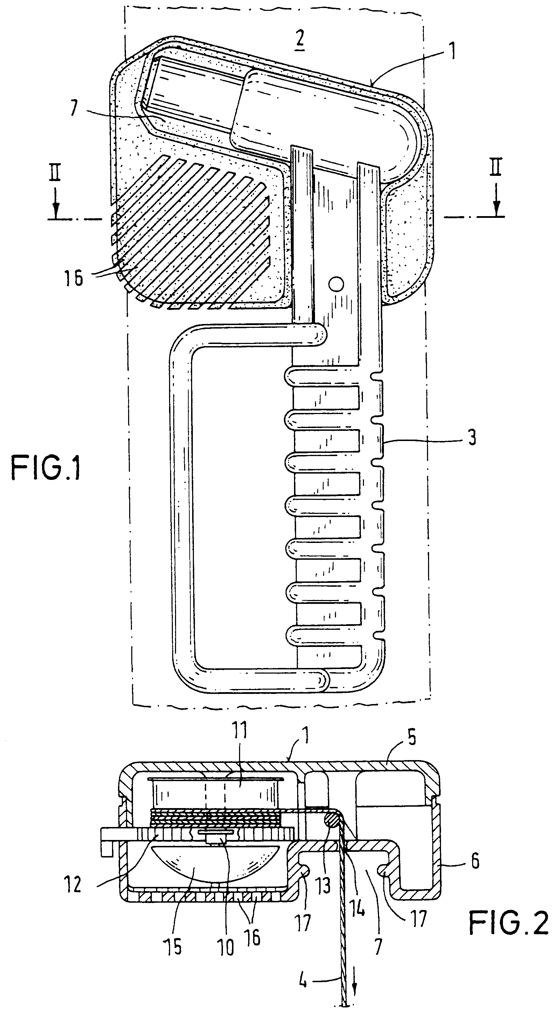

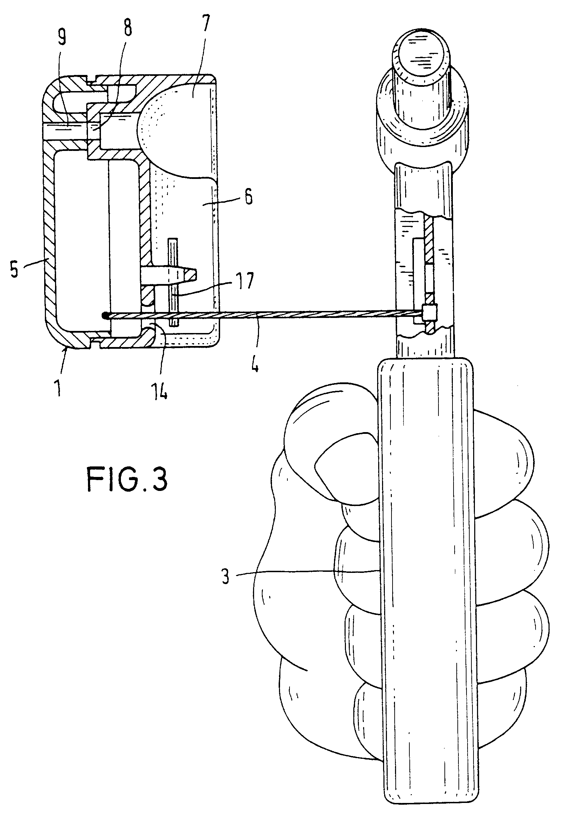

Fig. 1 bis 3 zeigen eine Haltevorrichtung 1, die an einer Anschlußwand, bei der es sich um eine Fenstersäule 2 eines Omnibusses handeln kann, mittels nicht gezeigter Schrauben befestigt ist. Die Haltevorrichtung 1 trägt einen Nothammer 3, bei dem es sich zweckmäßigerweise um einen solchen handelt, wie er in den Unterlagen der EP-0 134 558 B1 gezeigt und beschrieben ist.

Die Haltevorrichtung ist mit einem Sicherungsseil 4 ausgerüstet, dessen freies Ende unverlierbar und abreißfest am Nothammer 3 befestigt ist, z.B. durch Umspritzen bei der Nothammerherstellung.

Die Haltevorrichtung besteht aus einem zweiteiligen Gehäuse mit einem an einer Anschlußwand anzuschraubenden Gehäuseunterteil 5 und einem daran z.B. über Klipsverbindungen festzulegenden Gehäuseoberteil 6 mit Aushöhlungen 7 zur Aufnahme des Hammerkopfs und eines axialen Teilbereichs des Hammerstiels. Zur schraubgemäßen Befestigung an einer Anschlußwand sind das Gehäuseunterteil 5 und das Gehäuseoberteil 6 mit miteinander fluchtenden Bohrungen 8 und 9 versehen. Der Nothammer 3 wird über Klemmleisten 17 an der Haltevorrichtung 1 gehalten.

Im Gehäuseunterteil 5 sitzt auf einem daran senkrecht zum Gehäuseboden angeformten Lagerzapfen 10 eine drehbeweglich gelagerte Seilaufwickeltrommel 11 mit einem im einzelnen nicht dargestellten Federzugwerk und einer Rücklaufsperre 12, die ebenfalls nicht detailliert dargestellt ist. Diese Bauteile können analog solchen, wie man sie bei Fensterrollos (Springrollos) kennt, ausgebildet sein. Die Seilaufwickeltrommel 11, an der das Sicherungsseil 4 einendig befestigt ist, nimmt eine Seillänge auf, die ausreicht, um im abgezogenen Zustand eine unbehinderte Benutzung des Nothammers 3 zu gestatten. Ein Umlenkstift 13 und eine Seilöffnung 14 im Gehäuseoberteil 6 ermöglichen einen behinderungsfreien Seilabzug.

Ebenso wie das Gehäuseunterteil 5 ist auch das Gehäuseoberteil 6 wannenförmig ausgebildet und der sich daraus ergebende Hohlraum wird für die Anordnung eines akustischen Signalgebers, hier als Signalglocke 15 dargestellt, genutzt. Wandungsöffnungen 16 im Gehäuseoberteil 6 ermöglichen einen Schallaustritt.

## Patentansprüche

1. Nothammer (3) zum Einschlagen von Glasscheiben, welcher aus einem Stiel und einem daran angeordneten Hammerkopf besteht und von einer Haltevorrichtung (1) getragen wird, die ihrerseits an einer Anschlußwand befestigbar ist, wobei eine den Nothammer (3) mit der Haltevorrichtung (1) verbindende Diebstahlsicherung in Form eines den bestimmungsgemäßen Gebrauch des Nothammers (3) nicht behindernden Verbindungsglieds mit einem gegen Abreißen oder Durchtrennen geschützten Aufbau vorgesehen ist, dadurch gekennzeichnet, daß die Haltevorrichtung (1) mit einem Gehäuseunterteil (5) sowie mit einem Gehäuseoberteil (6) ausgebildet ist, daß das Gehäuseoberteil (6) Aushöhlungen (7) und Klemmleisten (17) zur Aufnahme und Halterung des Hammerkopfs und eines axialen Teilbereichs des Hammerstiels aufweist, daß das flexible Verbindungsglied aus einem Sicherungsseil (4) besteht, und daß innerhalb des Gehäuses eine Seilaufwickeltrommel (11) drehbeweglich angeordnet ist, die das darauf in Windungen gelegte Sicherungsseil (4) trägt.

2. Nothammer nach Anspruch 1, dadurch gekennzeichnet, daß das Sicherungsseil (4) eine kunststoffummantelte Stahldrahtseele aufweist.

3. Nothammer nach Anspruch 1 oder 2, dadurch gekennzeichnet, daß die Seilaufwickeltrommel (11) mit einem Federzugwerk ausgestattet ist.

4. Nothammer nach Anspruch 3 gekennzeichnet durch eine Rücklaufsperre für das Federzugwerk.

5. Nothammer nach wenigstens einem der Ansprüche 1 bis 4, gekennzeichnet durch einen akustischen Signalgeber (15), der mit der Seilaufwickeltrommel (11) gekoppelt ist.

## Claims

1. Emergency hammer (3) for breaking glass panes, which consists of a handle and a hammer head arranged thereon and is supported by a holding device (1) which can in turn be fastened to a mounting wall, a theft protection arrangement connecting the emergency hammer (3) to the holding device (1) being provided in the form of a connecting member, which does not impede the use as intended of the emergency hammer (3), with a construction protected against being torn off or cut through, characterized in that the holding device (1) is designed with a housing lower part (5) and also with a housing upper part (6), in that the housing upper part (6) has recesses (7) and clamping strips (17) for receiving and holding the hammer head and an axial part region of the hammer handle, in that the flexible connecting member consists of a retaining cable (4), and in that a cable take-up drum (11), which bears the retaining cable (4) laid on it in turns, is arranged rotatably inside the housing.

2. Emergency hammer according to Claim 1, characterized in that the retaining cable (4) has a plastic-sheathed steel-wire core.

3. Emergency hammer according to Claim 1 or 2, characterized in that the cable take-up drum (11) is equipped with a spring-tension mechanism.

4. Emergency hammer according to Claim 3, characterized by a return stop for the spring-tension mechanism.

5. Emergency hammer according to at least one of Claims 1 to 4, characterized by an acoustic signalling device (15) which is connected to the cable take-up drum (11).

## Revendications

1. Marteau brise-vitre (3) qui consiste en un manche et une tête de marteau montée sur celui-ci et qui est supporté par un dispositif de fixation (1) qui, pour sa part, peut être fixé à une paroi d'attache, un dispositif antivol étant prévu qui relie le marteau brise-vitre (3) au dispositif de fixation (1) et se présente sous la forme d'un élément de liaison qui n'empêche pas l'utilisation du marteau brise-vitre (3) conformément à sa destination et est doté d'une structure protégée contre un arrachage ou un sectionnement, caractérisé en ce que le dispositif de fixation (1) est réalisé avec une partie inférieure (5) de boîtier et avec une partie supérieure (6) de boîtier, en ce que la partie supérieure (6) de boîtier présente des évidements (7) et des moulures de serrage (17) pour recevoir et maintenir la tête du marteau et une partie axiale du manche du marteau, en ce que l'élément de liaison flexible consiste en un câble de sûreté (4) et en ce que, à l'intérieur du boîtier, est monté à rotation un tambour enrouleur de câble (11), qui porte le câble de sûreté (4) disposé sur le tambour en spires.

2. Marteau brise-vitre suivant la revendication 1, caractérisé en ce que le câble de sûreté (4) présente une âme en fil d'acier gainée de plastique.

3. Marteau brise-vitre suivant la revendication 1 ou 2, caractérisé en ce que le tambour enrouleur de câble (11) est équipé d'un mécanisme de traction à ressort.

4. Marteau brise-vitre suivant la revendication 3, caractérisé par un dispositif d'arrêt de retour destiné au mécanisme de traction à ressort.

5. Marteau brise-vitre suivant au moins l'une des revendications 1 à 4, caractérisé en ce qu'un avertisseur sonore (15) est accouplé au tambour enrouleur de câble (11).
